# EUROPEAN PATENT SPECIFICATION

(11) **EP 3 254 744 B1**
(45) Date of publication and mention of the grant of the patent: **09.04.2025**
(21) Application number: 17174976.5
(22) Date of filing: 08.06.2017
(51) Int. Cl.: B64D 13/06, B01D 45/16

(54) **PARTICLE SEPARATION SYSTEM**
PARTIKELABSCHEIDUNGSSYSTEM
SYSTÈME DE SÉPARATION DE PARTICULES

(30) Priority: 08.06.2016 US 201615176970
(43) Date of publication of application: 13.12.2017
(73) Proprietor: Hamilton Sundstrand Corporation, Charlotte, NC 28217 (US)
(72) Inventor: PRASAD, Dilip, North Granby, CT Connecticut 06060 (US); HIPSKY, Harold W., Willington, CT Connecticut 06279 (US); ZYWIAK, Thomas M., Southwick, MA Massachusetts 01077 (US)
(74) Representative: Dehns

(56) References cited:
- EP-A2- 2 584 168
- WO-A2-2016/032585
- US-A- 4 292 050
- US-A- 5 261 242

## Description

### BACKGROUND

The subject matter disclosed herein relates to particle separation systems, and more particularly, to particle separation systems for use with aircraft environmental control systems.

Environmental control systems utilized within an aircraft may employ exterior air flow to cool the working fluid of the environmental control system. Heat exchangers and fans may be utilized to allow exterior air flow to remove heat from the working fluid. It is preferable for these heat exchangers utilize a particle free air flow to prevent fouling and maintain desired levels of heat transfer. US 5261242 A describes a process for extraction of a liquefiable substance from a gaseous carrier fluid. US 4292050 A describes a curved duct separator for removing particulate matter from a carrier gas. EP 2584168 A describes an integrated thermal system for a gas turbine engine.

### BRIEF SUMMARY

A particle separation system to remove particulate matter from an exterior air flow for use with an environmental control system is defined in claim 1 and includes a fan to accelerate the exterior air flow, a curved airflow path with an inner radius and an outer radius, the curved air flow path to receive the exterior air flow, a heat exchanger to receive the exterior air flow from the curved air flow path, a particle passage disposed along at least one of the inner radius and the outer radius to receive the particulate matter from the exterior air flow, a circumferential volute to receive the particulate matter from the particle passage, and a duct to transport the particulate matter from the circumferential volute to a downstream region disposed downstream of the heat exchanger.

Other aspects, features, and techniques of the device will become more apparent from the following description taken in conjunction with the drawings.

### BRIEF DESCRIPTION OF THE DRAWINGS

The subject matter is particularly pointed out and distinctly claimed in the claims at the conclusion of the specification. The foregoing and other features, and advantages of the embodiments are apparent from the following detailed description taken in conjunction with the accompanying drawings in which like elements are numbered alike in the FIGURES:
FIG. 1 is a schematic view of one embodiment of a particle separation system;
FIG. 2 is a schematic view of another embodiment of a particle separation system; and
FIG. 3 is a schematic view of another embodiment of a particle separation system.

### DETAILED DESCRIPTION

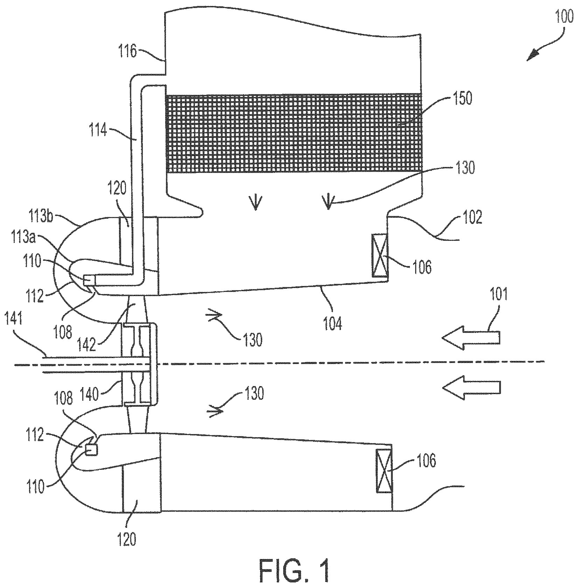

Referring to FIG. 1 a particle separation system 100 is shown. In the illustrated embodiment, the particle separation system 100 includes a fan housing 102, a particle passage 108, a circumferential volute 110, a duct 114, and a heat exchanger 150. The particle separation system 100 can be utilized to remove particles and debris from an exterior air flow 101 before the exterior air flow 101 flows through the heat exchanger 150. Advantageously, the use of the particle separation system 100 can prevent heat exchanger 150 fouling and reduce or eliminate the need to clean the heat exchanger 150.

In the illustrated embodiment, the fan housing 102 can be disposed on an aircraft body to receive exterior air flow 101. The fan housing 102 may guide the exterior air flow 101 into the contracting passage 104 of the particle separation system 100. In certain embodiments, struts 120 can provide structural support to the fan housing 102.

During ground and low speed operations, exterior air flow 101 may be directed into the contracting passage 104 to be accelerated by the fan 140. In the illustrated embodiment, the exterior air flow 101 can include dirt, debris, dust, particulate matter, etc.

In certain embodiments, sprayers 130 can spray water or other suitable fluid upstream of the fan 140 to cool the exterior air flow 101. The sprayed water may be previously condensed by the environmental control system of the aircraft to reduce the temperature of the exterior air flow 101 by undergoing evaporation. In certain embodiments, the sprayers 130 can be disposed along the walls of the contracting passage 104. In certain embodiments, sprayers 130 can be disposed upstream of the heat exchanger 150 to further depress air temperatures. In other embodiments, the sprayers 130 can be disposed in any suitable location.

In the illustrated embodiment, a fan 140 can be utilized during ground and low aircraft speed operations to draw exterior air flow 101 into the particle separation system 100 and to the heat exchanger 150. In the illustrated embodiment, the fan 140 is driven by a rotating shaft 141 to rotate the fan blades 142. In certain embodiments, the rotating shaft 141 may provide power to the fan 140 from the air cycle machine that comprises a portion of the overall environmental control system. Advantageously, the use of the sprayers 130 upstream of the fan 140 can reduce fan 140 work to lower fan exhaust temperatures, allowing for greater cooling within the heat exchanger 150. In certain embodiments, lower fan 140 temperatures allows for the use of lightweight, inexpensive composite materials such as fiber-reinforced plastic for fan blades 142 as well as for other portions of the fan 140. Further, the use of the relatively straight contracting passage 104 can increase uniformity of the exterior air flow 101, resulting in greater fan 140 efficiency.

During operation, centrifugal force imparted by the fan 140 causes particulate matter within the exterior air flow 101 to segregate toward the outer periphery of the fan blades 142. In the illustrated embodiment, the exterior air flow 101 is directed through the curved air flow path 112. The curved air flow path 112 includes an inner radius 113a and an outer radius 113b. In the illustrated embodiment, the particulate matter is directed toward the inner radius 113a of the curved flow path 112. According to the invention, the curved air flow path 112 can direct the exterior air flow 101 up to 180 degrees from the original flow direction, reversing the direction of the exterior air flow 101.

In the illustrated embodiment, particulate matter is captured in the particle passage 108. In the illustrated embodiment, the particle passage 108 is disposed along the inner radius 113a of the curved air flow path 112 beyond the fan 140. In the illustrated embodiment, the particle passage 108 can receive particulate matter since the mass of ingested foreign particles is considerably greater than that of the air being pumped causing inertial forces to force the particulate matter away from the air trajectory of the exterior air flow 101 through the curved air flow path 112.

In the illustrated embodiment, particulate matter captured within the particle passage 108 is directed into the circumferential volute 110. From the circumferential volute 110, particulate matter is directed to a downstream region 116 beyond the heat exchanger 150. In the illustrated embodiment, the downstream region 116 is a lower pressure region facilitating the flow of particulate matter away from the curved air flow path 112. Particulate matter is then eliminated overboard by the exterior air flow 101 beyond the heat exchanger 150.

In certain embodiments, bypass valves 106 can be utilized to bypass the fan 140 and the air flow path 112 to allow exterior air flow 101 to directly interact with the heat exchanger 150. The bypass valve 106 may be opened during flight when the fan 140 may be required to a lesser extent to direct air to the heat exchanger 150.

In the illustrated embodiment, the heat exchanger 150 is exposed to the exterior air flow 101. The heat exchanger 150 can allow a fluid within the heat exchanger 150 to be cooled by the exterior air flow 101. Advantageously, the particle separation system 100 allows for particulate matter to be separated and removed in a downstream region 116 of the heat exchanger 150, allowing for greater efficiency.

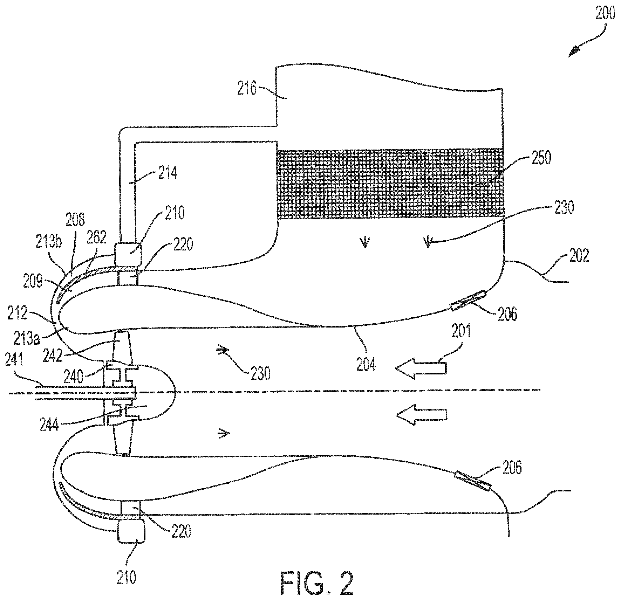

Referring to FIG. 2, a particle separation system 200 is shown. In the illustrated embodiment, similar numerals represent similar elements as described in FIG. 1. In the illustrated embodiment, the particle separation system 200 further includes a splitter 262 disposed within the curved air flow path 212 to define an inner channel 209 and an outer channel 208.

In the illustrated embodiment, during operation, exterior air flow 201 undergoes significant acceleration within the curved air flow path 212. In the illustrated embodiment, the inner channel 209 is disposed adjacent to the inner radius 213a. During operation, the accelerated air flow has a lower inertia allowing the exterior air flow 201 to be directed into the inner channel 209.

In the illustrated embodiment, the outer channel 208 is disposed adjacent to the outer radius 213b. Particulate matter is forced toward the outer channel 208. Similarly, the outer channel 208 terminates with a circumferential volute 210, wherein particulate matter is transferred to a downstream region 216 as described in FIG. 1.

Further, in the illustrated embodiment, the fan 240 includes an air flow device 244. In the illustrated embodiment, the air flow device 244 is a spinning aerodynamic device to direct air flow and prevent undesired flow characteristics. In certain embodiments, the air flow device 244 includes an aerodynamically shaped fan hub and casing to provide a convergent flow path along the flow direction.

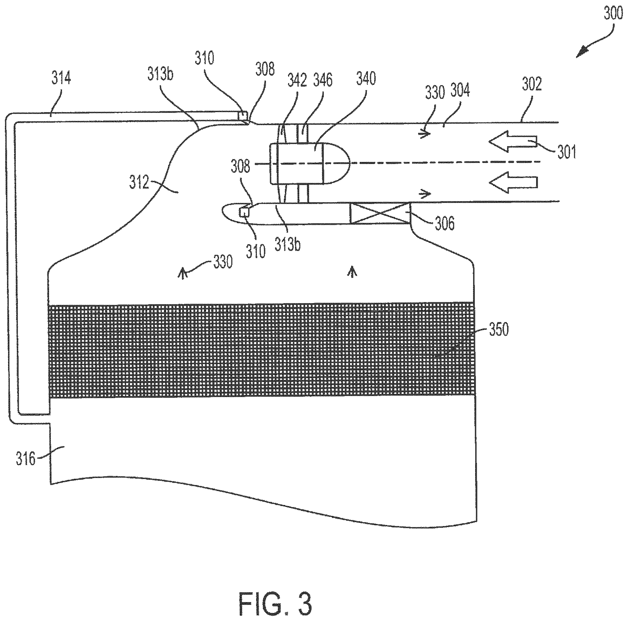

Referring to FIG. 3, a particle separation system 300 is shown. In the illustrated embodiment, similar numerals represent similar elements as described in FIG. 1. In the illustrated embodiment, the particle separation system 300 utilizes an electric fan 340. Advantageously, the fan body 302 and the flow path 312 can be designed without consideration of a mechanical shaft to drive the fan. Further, the use of an electrical fan 340 upstream of the heat exchanger 350 allows for ease of motor cooling. The fan 340 may be supported by fan struts 346.

The terminology used herein is for the purpose of describing particular embodiments only and is not intended to be limiting of the embodiments. While the description of the present embodiments has been presented for purposes of illustration and description, it is not intended to be exhaustive or limited to the embodiments in the form disclosed.
Accordingly, the embodiments are not to be seen as limited by the foregoing description, but are only limited by the scope of the appended claims.

## Claims

1. A particle separation system to remove particulate matter from an exterior air flow (110) for use with an environmental control system, the particle separation system comprising:
a fan (140) to accelerate the exterior air flow (110); a particle separation device, the particle separation device comprising:
a curved airflow path (112) with an inner radius (113a) and an outer radius (113b), the curved air flow path (112) to receive the exterior air flow;
a particle passage (108) disposed along the inner radius (113a) to receive the particulate matter from the exterior air flow;
a circumferential volute (110) to receive the particulate matter from the particle passage (108); and
a duct (114) to transport the particulate matter from the circumferential volute to a downstream region, and **characterized in that** said curved airflow path (112) is configured to direct the exterior airflow (101) up to 180 degrees from its original flow direction, reversing the direction of the exterior air flow,
wherein the particle separation device further comprises a heat exchanger (150) to receive the exterior air flow (110) from the curved air flow path (112) and said downstream region is disposed downstream of the heat exchanger (150).

2. The particle separation system of claim 1, wherein the curved airflow path (112) includes a splitter (262) defining an inner channel adjacent to the inner radius of the curved air flow path (112) and an outer channel adjacent to the outer radius.

3. The particle separation system of any preceding claim, the particle separation device further comprising a bypass valve (106) to direct the exterior air flow beyond the curved air flow path (112).

4. The particle separation system of any preceding claim, the particle separation device further comprising a contracting passage (104) to direct the exterior air flow to the curved air flow path (112).

5. The particle separation system of any preceding claim, the particle separation device further comprising at least one sprayer (130) to spray a liquid into the exterior air flow (110).

6. The particle separation system of any preceding claim, further comprising at least one sprayer (130) to spray a liquid into the exterior air flow (110), wherein the at least one sprayer (262) is disposed upstream of the fan and the heat exchanger (150).

7. The particle separation system of any of claims 1 to 6, wherein the fan (140) is a shaft powered fan and includes a flow device to direct the exterior air flow (110).

8. The particle separation system of any of claims 1 to 7, wherein the fan (140) is an electric fan.

## Patentansprüche

1. Partikelabscheidungssystem zum Entfernen von Feststoffpartikeln aus einem Außenluftstrom (110) zur Verwendung mit einem Klimasteuersystem, wobei das Partikelabscheidungssystem Folgendes umfasst:
ein Gebläse (140) zum Beschleunigen des Außenluftstroms (110);
eine Partikelabscheidungsvorrichtung, wobei die Partikelabscheidungsvorrichtung Folgendes umfasst:
einen gekrümmten Luftstrompfad (112) mit einem Innenradius (113a) und einem Außenradius (113b), wobei der gekrümmte Luftstrompfad (112) den Außenluftstrom aufnimmt;
einen Partikeldurchgang (108), der entlang des Innenradius (113a) zum Aufnehmen der Feststoffpartikel aus dem Außenluftstrom angeordnet ist;
eine Umfangsspirale (110) zum Aufnehmen der Feststoffpartikel aus dem Partikeldurchgang (108); und
einen Kanal (114) zum Transportieren der Feststoffpartikel von der Umfangsspirale zu einem stromabwärts gelegenen Bereich und **dadurch gekennzeichnet, dass** der gekrümmte Luftstrompfad (112) zum Lenken des Außenluftstroms (101) um bis zu 180 Grad von seiner ursprünglichen Strömungsrichtung unter Umkehren der Richtung des Außenluftstroms konfiguriert ist,
wobei die Partikelabscheidungsvorrichtung ferner einen Wärmetauscher (150) zum Aufnehmen des Außenluftstroms (110) aus dem gekrümmten Luftstrompfad (112) umfasst und der stromabwärts gelegene Bereich stromabwärts des Wärmetauschers (150) angeordnet ist.

2. Partikelabscheidungssystem nach Anspruch 1, wobei der gekrümmte Luftstrompfad (112) einen Splitter (262) beinhaltet, der einen Innenkanal benachbart zu dem Innenradius des gekrümmten Luftstrompfads (112) und einen Außenkanal benachbart zu dem Außenradius definiert.

3. Partikelabscheidungssystem nach einem der vorhergehenden Ansprüche, wobei die Partikelabscheidungsvorrichtung ferner ein Bypassventil (106) zum Lenken des Außenluftstroms über den gekrümmten Luftstrompfad (112) hinaus umfasst.

4. Partikelabscheidungssystem nach einem der vorhergehenden Ansprüche, wobei die Partikelabscheidungsvorrichtung ferner einen sich verkleinernden Durchgang (104) zum Lenken des Außenluftstroms zu dem gekrümmten Luftstrompfad (112) umfasst.

5. Partikelabscheidungssystem nach einem der vorhergehenden Ansprüche, wobei die Partikelabscheidungsvorrichtung ferner mindestens einen Sprüher (130) zum Sprühen einer Flüssigkeit in den Außenluftstrom (110) umfasst.

6. Partikelabscheidungssystem nach einem der vorhergehenden Ansprüche, ferner umfassend mindestens einen Sprüher (130) zum Sprühen einer Flüssigkeit in den Außenluftstrom (110), wobei der mindestens eine Sprüher (262) stromaufwärts des Gebläses und des Wärmetauschers (150) angeordnet **ist.**

7. Partikelabscheidungssystem nach einem der Ansprüche 1 bis **6,** wobei das Gebläse (140) ein wellengetriebenes Gebläse ist und eine Strömungsvorrichtung zum Lenken des Außenluftstroms (110) beinhaltet.

8. Partikelabscheidungssystem nach einem der Ansprüche 1 bis **7,** wobei das Gebläse (140) ein elektrisches Gebläse **ist.**

## Revendications

1. Système de séparation de particules pour éliminer la matière particulaire d'un flux d'air extérieur (110) destiné à être utilisé avec un système de contrôle environnemental, le système de séparation de particules comprenant :
un ventilateur (140) pour accélérer le flux d'air extérieur (110) ;
un dispositif de séparation de particules, le dispositif de séparation de particules comprenant :
un trajet de flux d'air incurvé (112) avec un rayon interne (113a) et un rayon externe (113b), le trajet de flux d'air incurvé (112) devant recevoir le flux d'air extérieur ;
un passage de particules (108) disposé le long du rayon interne (113a) pour recevoir les particules provenant du flux d'air extérieur ;
une volute circonférentielle (110) pour recevoir la matière particulaire provenant du passage de particules (108) ; et
un conduit (114) pour transporter la matière particulaire de la volute circonférentielle à une région en aval, et **caractérisé en ce que** ledit trajet de flux d'air incurvé (112) est configuré pour diriger le flux d'air extérieur (101) jusqu'à 180 degrés par rapport à sa direction de flux d'origine, inversant la direction du flux d'air extérieur,
dans lequel le dispositif de séparation de particules comprend également un échangeur de chaleur (150) pour recevoir le flux d'air extérieur (110) du trajet de flux d'air incurvé (112) et ladite région en aval est disposée en aval de l'échangeur de chaleur (150).

2. Système de séparation de particules selon la revendication 1, dans lequel le trajet de flux d'air incurvé (112) comporte un séparateur (262) définissant un canal interne adjacent au rayon interne du trajet de flux d'air incurvé (112) et un canal externe adjacent au rayon externe.

3. Système de séparation de particules selon une quelconque revendication précédente, le dispositif de séparation de particules comprenant également une vanne de dérivation (106) pour diriger le flux d'air extérieur au-delà du trajet de flux d'air incurvé (112).

4. Système de séparation de particules selon une quelconque revendication précédente, le dispositif de séparation de particules comprenant également un passage de contraction (104) pour diriger le flux d'air extérieur vers le trajet de flux d'air incurvé (112).

5. Système de séparation de particules selon une quelconque revendication précédente, le dispositif de séparation de particules comprenant également au moins un pulvérisateur (130) pour pulvériser un liquide dans le flux d'air extérieur (110).

6. Système de séparation de particules selon une quelconque revendication précédente, comprenant également au moins un pulvérisateur (130) pour pulvériser un liquide dans le flux d'air extérieur (110), dans lequel le ou les pulvérisateurs (262) sont disposés en amont du ventilateur et de l'échangeur de chaleur (150).

7. Système de séparation de particules selon l'une quelconque des revendications 1 à 6, dans lequel le ventilateur (140) est un ventilateur actionné par arbre et comporte un dispositif de flux pour diriger le flux d'air extérieur (110).

8. Système de séparation de particules selon l'une quelconque des revendications 1 à 7, dans lequel le ventilateur (140) est un ventilateur électrique.
